# EUROPÄISCHE PATENTSCHRIFT

(11) **EP 3 966 154 B1**
(45) Veröffentlichungstag und Bekanntmachung des Hinweises auf die Patenterteilung: **14.08.2024**
(21) Anmeldenummer: 20724030.0
(22) Anmeldetag: 30.04.2020
(51) Int. Cl.: B67C 3/10, A23L 2/54, B67C 7/00

(54) **MASCHINE UND VERFAHREN ZUM FÜLLEN VON BEHÄLTERN MIT EINEM FLÜSSIGEN FÜLLGUT**
MACHINE AND METHOD FOR FILLING CONTAINERS WITH A LIQUID PRODUCT
MACHINE ET PROCÉDÉ POUR LE REMPLISSAGE DES RÉCIPIENTS AVEC UN PRODUIT LIQUIDE

(30) Priorität: 08.05.2019 DE 102019111929
(43) Veröffentlichungstag der Anmeldung: 16.03.2022
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2020/062014
(87) Internationale Veröffentlichungsnummer: WO 2020/225087

(56) Entgegenhaltungen:
- EP-A1- 1 127 835
- EP-A1- 3 473 587
- DE-A1- 19 825 559
- RAIMUND KALINOWSKI: "Kribbeln auf der Zunge", GETRÄNKEINDUSTRIE, 1 October 2002 (2002-10-01), pages 8 - 11, XP055724745, Retrieved from the Internet <URL:https://www.sachverstand-gutachten.de/veroeffentlichungen/GI_10-02_Kribbeln_auf_der_Zunge.pdf> [retrieved on 20200824]

## Beschreibung

Die Erfindung bezieht sich auf eine Füllmaschine zum Füllen von Behältern mit einem flüssigen Füllgut gemäß dem Oberbegriff des Patentanspruches 1 und auf ein Verfahren zum Füllen von Behältern mit einem flüssigen Füllgut gemäß dem Oberbegriff des Patentanspruches 6.

Die Erfindung betrifft Behälterbehandlungsmaschinen in der Getränkeindustrie, insbesondere Behälterbehandlungsmaschinen mit Leistungen von mehr als 5000 Behältern pro Stunde, insbesondere Behälterbehandlungsmaschinen mit einer Leistung von mehr als 20000 Behältern pro Stunde. Insbesondere betrifft die Erfindung Behälterbehandlungsmaschinen, welche als so genannte Füllmaschinen oder Füller für die Befüllung der Behälter mit flüssigem Füllgut, insbesondere mit Getränken ausgebildet und eingerichtet sind.

Füllmaschinen und Verfahren zum Füllen von Behältern mit einem flüssigen Füllgut sind aus dem Stand der Technik bestens bekannt. Soll die Flüssigkeit im Behälter Kohlenstoffdioxid (CO₂) oder Stickstoff (N₂) enthalten, so sind ebenfalls verschiedene Lösungen bekannt. Beispielsweise kann schon mit CO₂ oder N₂ versetztes Füllgut in die Behälter eingefüllt werden. Hierbei ist allerdings die Gefahr der Schaumbildung sehr groß.

Des Weiteren beschreibt die Druckschrift DE 100 28 676 A1 eine Vorrichtung und ein Verfahren, bei dem zunächst die Flasche mit CO2 gespült wird, dann mit dem flüssigen, CO2-freien Füllgut gefüllt wird, mit CO2 vorgespannt wird, sodann das Füllgut karbonisiert wird, woraufhin ein Beruhigen und Vorentlasten der mit dem karbonisierten Füllgut gefüllten Flasche und schließlich ein Restentlasten erfolgt. Nachteilig hierbei ist die relativ lange Zeit, die zum Füllen und Karbonisieren der Flaschen benötigt wird.

Die Druckschrift WO 2018/206698 A1 beschreibt eine weitere Vorrichtung zum Befüllen eines Behälters mit einem Füllprodukt und ein entsprechendes Verfahren. Dabei umfasst die Vorrichtung ein Füllventil zum Öffnen und Schließen eines Füllproduktdurchflusses zwischen einem Füllproduktreservoir und dem zu befüllenden Behälter sowie eine Karbonisierungsvorrichtung, die das den Füllproduktdurchfluss durchfließende Füllprodukt karbonisiert. Die Beaufschlagung des Füllprodukts mit dem CO2 findet also erst kurz vor dem Einfüllen des Füllprodukts in den zu befüllenden Behälter statt. Dies erfordert sowohl im Aufbau der Vorrichtung als auch in der Steuerung fein aufeinander abgestimmte Komponenten, insbesondere eine feine Abstimmung zwischen Füllventil und Karbonisierungsvorrichtung. Weitere Ausführungsformen von Füllmaschinen und entsprechenden Füllverfahren sind zum Beispiel aus den Druckschriften EP 1 127 835 A1 und EP 3 473 587 A1 bekannt.

Ferner geht beispielsweise aus der DE 198 25 559 A1 eine Abfüllvorrichtung sowie ein Verfahren zum Füllen von Behältern mit einem flüssigen Füllgut hervor, wobei die Abfüllvorrichtung ein Füllorgan aufweist, an das eine Flasche zum Abfüllen ankoppelbar ist und wobei eine Kohlendioxidleitung mit einem Ventil vorgesehen ist, die bei geöffnetem Ventil in Fluidverbindung mit dem Innenraum der Flasche steht. Beim Füllvorgang wird die Flasche an dem Füllorgan mit Kohlendioxid vorgespannt und nach dem Vorspannen wird die Flasche mit Wasser befüllt, wobei das Wasser beim Einfüllen turbulent verwirbelt und in mehrere Teilströme aufgespalten wird und so während des Füllens durch das in der Flasche befindliche Kohlendioxid karbonisiert wird.

Der vorliegenden Erfindung liegt die Aufgabe zu Grunde, eine verbesserte Füllmaschine und ein entsprechend verbessertes Verfahren zum Füllen von Behältern mit einem flüssigen Füllgut bereitzustellen, die insbesondere ein schnelles Füllen des Behälters und Karbonisieren des flüssigen Füllguts ermöglichen und dabei möglichst einfach aufgebaut sind.

Die Aufgabe wird durch eine Füllmaschine zum Füllen von Behältern mit einem flüssigen Füllgut gemäß den Merkmalen des unabhängigen Patentanspruchs 1 und durch ein Verfahren zum Füllen von Behältern mit einem flüssigen Füllgut gemäß den Merkmalen des nebengeordneten Patentanspruchs 6 gelöst. Die jeweiligen Unteransprüche betreffen dabei besonders bevorzugte Ausführungsvarianten der Erfindung.

Vorgeschlagen wird eine Füllmaschine zum Füllen von Behältern mit einem flüssigen Füllgut. Behälter sind dabei beispielsweise Flaschen, weitere flaschenähnliche Behälter oder auch Dosen, und zwar hergestellt aus unterschiedlichen Materialien. Bei dem flüssigen Füllgut handelt es sich insbesondere um Getränke oder flüssige Lebensmittel.

Die Füllmaschine weist eine Vielzahl von Füllpositionen auf, wobei jede Füllposition ein Füllelement aufweist. Dabei umfasst jedes Füllelement ein Dichtelement zum Abdichten einer Mündung des Behälters. Wenn die Mündung des Behälters mit dem Dichtelement abgedichtet ist, dann besteht keine Verbindung mehr zwischen dem Innenraum des Behälters und der den Behälter umgebenden Umgebungsluft bzw. der Atmosphäre. Insbesondere kann dann im Behälter ein Unter- oder ein Überdruck aufgebaut werden. Des Weiteren umfasst jedes Füllelement einen durch ein Füllventil verschließbaren Flüssigkeitskanal und einen durch ein Gasventil verschließbaren Gaskanal, wobei der Flüssigkeitskanal bei geöffnetem Füllventil in Fluidverbindung mit dem Innenraum des Behälters steht und der Gaskanal bei geöffnetem Gasventil ebenfalls in Fluidverbindung mit dem Innenraum des Behälters steht. Mit anderen Worten enden sowohl der Flüssigkeitskanal als auch der Gaskanal in dem durch das Dichtelement abgedichteten Raum.

Erfindungsgemäß ist die Füllmaschine dazu ausgebildet, vor dem Füllen mit flüssigen Füllgut über den Gaskanal CO₂ oder N₂ in den Behälter einzubringen und im Behälter einen Vorspanndruck zu erzeugen. Das dem Behälter abgewandte Ende des Gaskanals ist also vorzugsweise an eine CO₂-Flasche, ein CO₂-Reservoir oder eine sonstige CO₂- oder N₂-Quelle angeschlossen. Das unter Vorspanndruck im Behälter befindliche CO₂ oder N₂ hat dabei die zur Karbonisierung oder Nitrogenisierung des flüssigen Füllguts erforderliche Menge. Des Weiteren ist die Füllmaschine dazu ausgebildet, über den Flüssigkeitskanal das flüssige Füllgut unter einem den Vorspanndruck überschreitenden Fülldruck in den Behälter einzubringen. D.h. die Füllmaschine ist dazu eingerichtet, einen Fülldruck zu erzeugen, der größer als der erzeugte und im Behälter aufgebaute Vorspanndruck ist. Letzteres ist dazu notwendig, dass das flüssige Füllgut überhaupt gegen den Vorspanndruck in den Behälter eingebracht werden kann. Beim Einströmen des flüssigen Füllguts in den Behälter wird dann das im Behälter befindliche CO₂ unmittelbar im flüssigen Füllgut gelöst und damit das flüssige Füllgut karbonisiert. Da die Mündung des Behälters durch das Dichtelement abgedichtet ist, kann das CO₂ während des Füllprozesses auch nicht aus dem Behälter entweichen. Mit einer derart ausgebildeten Füllmaschine kann ein schnelles Füllen des Behälters bei gleichzeitiger Karbonisieren des flüssigen Füllguts während des Füllens erreicht werden. Darüber hinaus ist eine derartige Füllmaschine relativ einfach aufgebaut.

Vorteilhafterweise ist das flüssige Füllgut vor dem Füllen in den Behälter nicht oder nur teilweise karbonisiert. Bei nicht karbonisiertem flüssigen Füllgut findet die vollständige Karbonisierung des flüssigen Füllguts beim Befüllen des Behälters statt. Ist hingegen das flüssige Füllgut schon teilweise karbonisiert, dann findet beim Befüllen des Behälters lediglich eine Nachkarbonisierung statt. In beiden Fällen weist das flüssige Füllgut im Behälter dann den gewünschten CO₂-Gehalt bzw. Karbonisierungsgrad auf und das Befüllen der Behälter erfolgt schnell und einfach.

Es ist von Vorteil, wenn der Vorspanndruck zwischen 0,1 bar und 6 bar, vorzugsweise zwischen 2 bar und 5 bar, beträgt. Ein Vorspanndruck von 0,5 bar entspricht dabei ungefähr 1 g CO₂ pro Liter, ein Vorspanndruck von 5 bar ungefähr 10 g CO₂ pro Liter und Vorspanndrücke von 2 bar und 4 bar entsprechen ungefähr 4 g bzw. 8 g CO₂ pro Liter. Damit sind die genannten Vorspanndrücke dazu geeignet, Getränke mit dem in der Getränkeindustrie üblichen CO₂-Gehalt, der bis etwa 8 g CO₂ pro Liter reicht, herzustellen.

Weiterhin vorteilhaft ist es, wenn jedes Füllelement einen durch ein Vakuumventil verschließbaren Vakuumkanal umfasst, wobei der Vakuumkanal bei geöffnetem Vakuumventil in Fluidverbindung mit dem Innenraum des Behälters steht, d.h., der Vakuumkanal endet in dem durch das Dichtelement abgedichteten Raum. Die Füllmaschine ist dabei dazu ausgebildet, über den Vakuumkanal im Innenraum des Behälters einen Unterdruck zu erzeugen und/oder den Druck im Bereich der Mündung des Behälters zu verringern. Ein derartiger Vakuumkanal kann in vielfältiger Weise verwendet werden. Zunächst einmal kann, bevor dem Behälter das CO₂ unter Vorspanndruck zugeführt wird, über den Vakuumkanal Luft bzw. Restluft aus dem Behälter entfernt werden. Je weniger Luft oder Sauerstoff noch im Behälter befindlich ist, desto besser kann die Karbonisierung des flüssigen Füllguts erfolgen. Je nachdem, wie wenig Restluft im Behälter vorhanden sein soll, kann der Behälter nach dem Evakuieren über den Gaskanal mit CO₂ gefüllt werden und anschließend noch einmal evakuiert werden. Diese Schritte können gegebenenfalls mehrfach wiederholt werden.

Ein Spülen des Behälters ist auch dadurch möglich, dass gleichzeitig CO₂ über den Gaskanal in den Behälter eingeleitet wird und das im Behälter befindliche Gasgemisch über den Vakuumkanal abgesaugt wird. Auch hierdurch wird Luft bzw. Restluft aus dem Behälter entfernt.

Eine Alternative zum Evakuieren bzw. Spülen des Behälters ist, dem Füllelement einen schon mit CO₂ vorgefüllten Behälter zuzuführen. In diesem Fall kann auf ein weiteres Spülen und damit auf den Vakuumkanal verzichtet werden.

Nach dem Füllen des Behälters mit dem flüssigen Füllgut kann der Druck im Bereich der Mündung des Behälters auf einen bestimmten Wert eingestellt und gegebenenfalls zu einem späteren Zeitpunkt auf Atmosphärendruck entlastet werden. Zum Verringern des Drucks wird hierbei das Vakuumventil geöffnet, so dass überschüssiges Gas aus dem Bereich der Mündung des Behälters entweichen kann. Die Entlastung auf den Atmosphärendruck kann auch über eine weitere Verbindung nach Außen erfolgen.

Erfindungsgemäß weist das Füllelement einen Drucksensor auf, der dazu ausgebildet ist, den Druck im Innenraum des Behälters und/oder im Bereich der Mündung des Behälters zu messen. In Abhängigkeit der Messwerte dieses Drucksensors können das Gasventil und/oder das Vakuumventil so gesteuert werden, dass der gewünschte Druck im Innenraum des Behälters bzw. im Bereich der Mündung des Behälters herrscht. Dies ist insbesondere für den Vorspanndruck von großer Bedeutung, da der Vorspanndruck die Menge an CO₂ bestimmt, die im flüssigen Füllgut gelöst wird, und damit ein wichtiges Merkmal des fertigen Produkts darstellt.

Erfindungsgemäß grenzt das Dichtelement an einen Schutzraum an. Dieser Schutzraum grenzt also an die Mündung des Behälters und steht mit dem Innenraum des Behälters in Fluidkontakt. Der Innenraum des Behälters und der Schutzraum sind jedoch gegenüber der Umgebung abgedichtet. Ferner münden der Flüssigkeitskanal und der Gaskanal in den Schutzraum. Des Weiteren weist jede Füllposition eine Verschließeinrichtung auf, wobei die Verschließeinrichtung dazu ausgebildet ist, die Mündung des Behälters im Schutzraum mit einem Verschlussdeckel zu verschließen. Der Verschlussdeckel ist dabei beispielsweise ein Kronkorken, ein Schraubverschluss oder der Deckel einer Getränkedose. Mit der Verschließeinrichtung wird der Behälter im Schutzraum verschlossen. Dazu wird, falls dies noch nicht der Fall ist, der Druck im Schutzraum auf einen Wert oberhalb des Sättigungsdrucks des CO₂ im flüssigen Füllgut eingestellt. Dadurch, dass der Behälter sofort nach dem Befüllen im Schutzraum verschlossen wird, ist eine besonders schnelle Befüllung und Behandlung des Behälters möglich.

Schließlich ist es vorteilhaft, wenn die Füllpositionen an einem umlaufenden Transportelement angeordnet sind. Über einen Einlaufstern werden dann die Behälter vom Transportelement übernommen und über einen Auslaufstern werden die befüllten Behälter der darauffolgenden Behälterbehandlungsmaschine übergeben. So kann eine schnelle Befüllung und Behandlung der Behälter erfolgen, ohne dass die Behälter zwischendurch gestoppt werden müssen.

Ferner wird ein Verfahren zum Füllen von Behältern mit einem flüssigen Füllgut vorgeschlagen. Behälter sind dabei beispielsweise Flaschen, weitere flaschenähnliche Behälter oder auch Dosen. Bei dem flüssigen Füllgut handelt es sich insbesondere um Getränke oder flüssige Lebensmittel. Das Füllen der Behälter erfolgt dabei mittels einer Füllmaschine gemäß der vorangegangenen Beschreibung. Insbesondere weist die Füllmaschine eine Vielzahl von Füllpositionen auf, wobei jede Füllposition ein Füllelement aufweist. Eine Mündung des Behälters wird mit einem Dichtelement des Füllelements abgedichtet, so dass der Innenraum des Behälters nicht mehr in Kontakt mit der Umgebungsluft steht. Zum Füllen des Behälters wird ein einen Flüssigkeitskanal verschließendes Füllventil geöffnet, so dass das flüssige Füllgut über den Flüssigkeitskanal unter einem Fülldruck in den Behälter eingebracht wird.

Erfindungsgemäß wird nach dem Abdichten der Mündung des Behälters und vor dem Einbringen des flüssigen Füllguts ein einen Gaskanal verschließendes Gasventil geöffnet. Ein dem Behälter abgewandtes Ende des Gaskanals ist dabei an eine CO₂-Flasche, ein CO₂-Reservoir oder eine sonstige CO₂-Quelle angeschlossen, so dass bei Öffnen des Gasventils vor dem Füllen mit dem Füllgut CO₂ in den Behälter eingebracht wird und im Behälter ein Vorspanndruck erzeugt wird. Das unter Vorspanndruck im Behälter befindliche CO₂ hat dabei die zur Karbonisierung des flüssigen Füllguts erforderliche Menge. Anschließend wird das flüssige Füllgut unter einem den Vorspannungsdruck überschreitenden Füllgutdruck in den Behälter eingebracht. Um anschließend das flüssige Füllgut gegen den Vorspanndruck in den Behälter einbringen zu können, ist der Fülldruck besonders vorteilhaft größer als der Vorspanndruck gewählt. Mit diesem Verfahren kann ein schnelles Füllen des Behälters bei gleichzeitigem Karbonisieren des flüssigen Füllguts erreicht werden.

Weiterhin vorteilhaft kann den mit CO₂ vorgespannten Behälter nicht oder teilweise karbonisierte Flüssigkeit gefüllt werden. Bei nicht karbonisiertem flüssigen Füllgut findet die vollständige Karbonisierung des flüssigen Füllguts beim Befüllen des Behälters statt. Ist hingegen das flüssige Füllgut schon teilweise karbonisiert, dann findet beim Befüllen des Behälters lediglich eine Nachkarbonisierung statt. In beiden Fällen weist das flüssige Füllgut im Behälter dann den gewünschten CO₂-Gehalt bzw. Karbonisierungsgrad auf und das Befüllen der Behälter erfolgt schnell und einfach.

Vorteilhafterweise wird beim Einbringen des flüssigen Füllguts in den Behälter das im Behälter befindliche CO₂ sofort im flüssigen Füllgut gelöst und dadurch das flüssige Füllgut zumindest teilweise karbonisiert. Dadurch, dass die Mündung des Behälters abgedichtet ist, kann das CO₂ auch nicht aus dem Behälter entweichen. So erfolgt also eine schnelle Karbonisierung des flüssigen Füllguts.

Erfindungsgemäß wird der im Innenraum des Behälters und/oder im Bereich der Mündung des Behälters herrschende Druck mittels eines Drucksensors gemessen. Dann können das Gasventil und etwaige andere Ventile, die eine Gaszu- bzw. -abfuhr in den bzw. aus dem vom Dichtelement verschlossenen Raum ermöglichen, in Abhängigkeit der Messwerte des Drucksensors so gesteuert werden, dass der gewünschte Druck im Innenraum des Behälters bzw. im Bereich der Mündung des Behälters herrscht. Dies ist insbesondere für den Vorspanndruck von großer Bedeutung, da der Vorspanndruck die Menge an CO₂ bestimmt, die im flüssigen Füllgut gelöst wird, und damit ein wichtiges Merkmal des fertigen Produkts darstellt.

Es ist auch vorteilhaft, wenn vor dem Einbringen des CO₂ unter Vorspanndruck in den Behälter der Behälter zumindest einmal über einen Vakuumkanal evakuiert wird. Damit wird noch im Behälter befindliche Luft bzw. Restluft aus dem Behälter entfernt, was die Karbonisierung des flüssigen Füllguts verbessert. Je nachdem, wie wenig Restluft im Behälter vorhanden sein soll, kann der Behälter nach dem Evakuieren über den Gaskanal mit CO₂ gefüllt werden und anschließend noch einmal evakuiert werden. Diese Schritte können gegebenenfalls mehrfach wiederholt werden. Alternativ oder zusätzlich zum Evakuieren des Behälters kann der Behälter mit CO₂ gespült werden. Dazu wird gleichzeitig CO₂ über den Gaskanal in den Behälter eingeleitet und das im Behälter befindliche Gasgemisch über den Vakuumkanal abgesaugt. Auch hierdurch wird Luft bzw. Restluft aus dem Behälter entfernt.

Erfindungsgemäß wird bei dem Verfahren ein Verschlussdeckel in einem Schutzraum, an den das Dichtelement angrenzt, aufgenommen. Der Verschlussdeckel ist dabei beispielsweise ein Kronkorken, ein Schraubverschluss oder der Deckel einer Getränkedose. Der Schutzraum grenzt an die Mündung des Behälters und steht mit dem Innenraum des Behälters in Fluidkontakt. Der Innenraum des Behälters und der Schutzraum sind jedoch gegenüber der Umgebung abgedichtet. Nach dem Einbringen des flüssigen Füllguts in den Behälter wird vorzugsweise ein Druck im Bereich der Mündung des Behälters eingestellt, der über dem Sättigungsdruck des CO₂ der im Behälter befindlichen Flüssigkeit liegt. Dabei ist es durchaus möglich, dass der im Bereich der Mündung des Behälters herrschende Druck nach dem Füllen des Behälters mit dem flüssigen Füllgut schon den gewünschten Wert aufweist. Sodann wird die Mündung des Behälters mit dem Verschlussdeckel verschlossen. Da nach dem Füllen des Behälters sofort das Verschließen des Behälters erfolgen kann, ist dieses Verfahren besonders schnell. Nach dem Verschließen des Behälters wird die Mündung des Behälters vom Dichtelement gelöst und der Behälter weitertransportiert bzw. der folgenden Behälterbehandlungsmaschine übergeben.

In einer anderen vorteilhaften Variante des Verfahrens wird nach dem Einbringen des flüssigen Füllguts vorzugsweise ein Druck im Bereich der Mündung des Behälters eingestellt wird, der in etwa gleich dem Sättigungsdruck des CO₂ der im Behälter befindlichen Flüssigkeit ist. Bei diesem Druck wird eine vorbestimmte Zeit lang eine Beruhigung der im Behälter befindlichen Flüssigkeit durchgeführt. Durch den Druck, der in etwa gleich dem Sättigungsdruck des CO₂ der im Behälter befindlichen Flüssigkeit ist, wird sichergestellt, dass während des Beruhigens der Flüssigkeit kein CO₂ aus der Flüssigkeit entweicht, andererseits aber kein weiteres CO₂ von der Flüssigkeit aufgenommen wird. Nach erfolgter Beruhigung der Flüssigkeit wird der Druck im Bereich der Mündung des Behälters auf Atmosphärendruck entlastet und der Behälter zu einer Verschließvorrichtung transportiert. Da für die Beruhigung der Flüssigkeit eine bestimmte Zeit lang gewartet werden muss, ist dieses Verfahren langsamer als das oben vorgestellte. Allerdings ist die Füllmaschine einfacher zu konstruieren, da auf eine Verschließeinrichtung, die den Behälter im Schutzraum verschließt, verzichtet werden kann.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen beispielhaft:
- Fig. 1: eine schematische Draufsicht auf eine Füllmaschine,
- Fig. 2: einen schematischen Schnitt durch ein Füllelement und
- Fig. 3: eine schematische Seitenansicht eines weiteren Füllelements.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

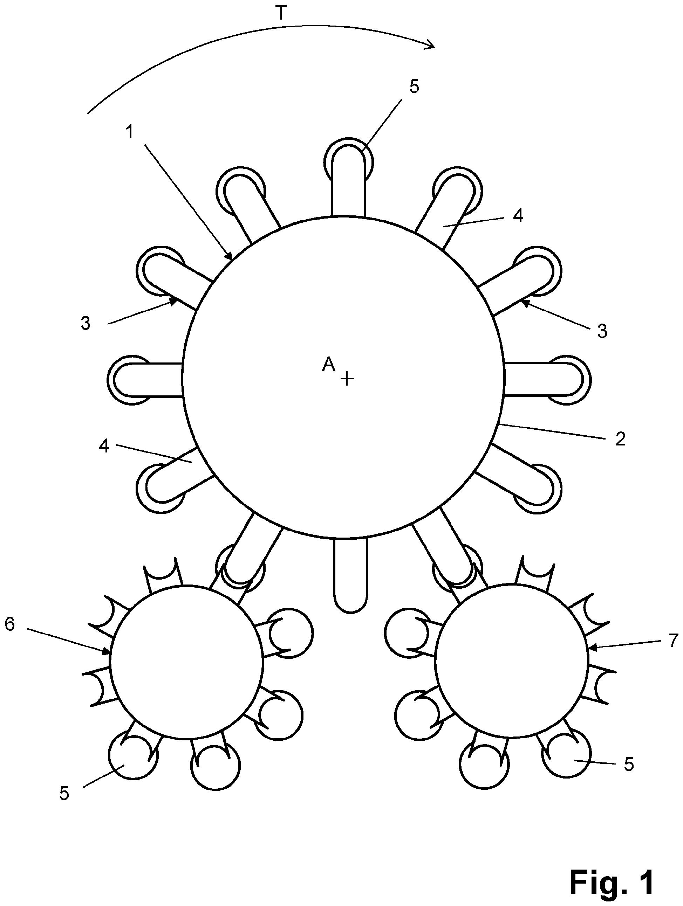

Figur 1 zeigt eine schematische Draufsicht auf eine Füllmaschine 1, die ein umlaufendes Transportelement 2 aufweist, das sich um eine vertikale Achse A dreht. Am Umfang des Transportelements 2 sind Füllpositionen 3 angeordnet, die Füllelemente 4 aufweisen. Beim Betrieb der Füllmaschine 1 übernimmt diese zu füllende Behälter 5 von einem Einlaufstern 6. Während die Füllmaschine 1 die Behälter 5 in einer Transportrichtung T transportiert, werden die Behälter 5 gefüllt. Die gefüllten Behälter 5 werden sodann an einen Auslaufstern 7 übergeben und ggf. einer weiteren Behandlung zugeführt.

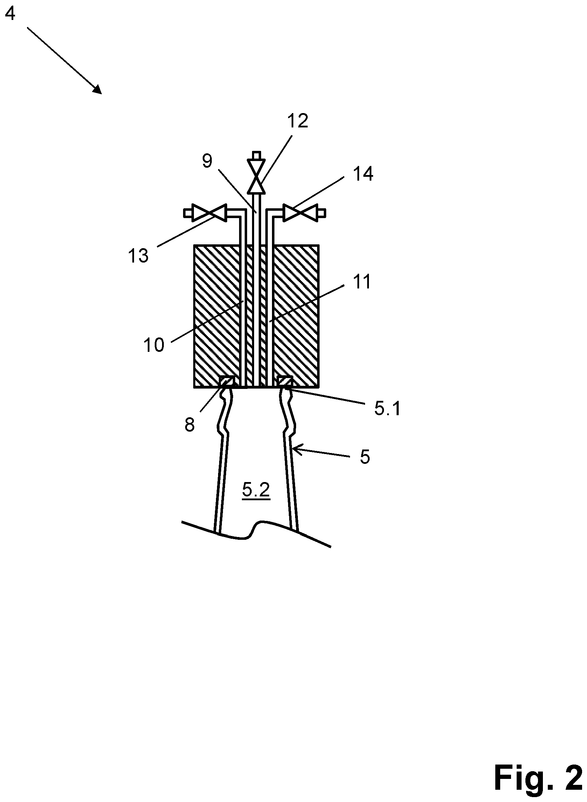

Figur 2 zeigt einen schematischen Schnitt durch ein Füllelement 4 einer erfindungsgemäßen Füllmaschine 1 sowie den oberen Mündungsbereich eines zu füllenden Behälters 5. Auch wenn der Behälter 5 hier als Flasche dargestellt ist, können auch andere Behälter 5, beispielsweise Dosen, verwendet werden.

An einer unteren Fläche des Füllelements 4 ist ein als Ringdichtung ausgebildetes Dichtelement 8 angeordnet, wobei das Dichtelement 8 so ausgeführt ist, dass es eine Mündung 5.1 des Behälters 5 abdichten kann. Dazu wird der Behälter 5 von unten an das Dichtelement 8 gedrückt. Wenn die Mündung 5.1 des Behälters 5 mit dem Dichtelement 8 abdichtet, hat ein Innenraum 5.2 des Behälters 5 keinen Kontakt mehr mit der den Behälter 5 umgebenden Umgebungsluft.

Des Weiteren weist das Füllelement 4 einen Flüssigkeitskanal 9, einen Gaskanal 10 und einen Vakuumkanal 11 auf, die jeweils mit einem Ende in dem vom Dichtelement 8 abgedichteten Raum enden, das heißt, der Flüssigkeitskanal 9, der Gaskanal 10 und der Vakuumkanal 11 stehen in Fluidkontakt mit dem Innenraum 52 des Behälters 5.

Des Weiteren sind im Flüssigkeitskanal 9 ein Füllventil 12 zum Verschließen des Flüssigkeitskanals 9, im Gaskanal 10 ein Gasventil 13 zum Verschließen des Gaskanals 10 und im Vakuumkanal 11 ein Vakuumventil 14 zum Verschließen des Vakuumkanals 11 angeordnet.

Nach dem Abdichten der Mündung 5.1 des Behälters 5 am Dichtelement 8 wird zunächst die noch im Innenraum 5.2 des Behälters 5 vorhandene Luft entfernt. Dazu wird das Vakuumventil 14 geöffnet, so dass die Luft über den Vakuumkanal 11 aus dem Behälter 5 entfernt wird. Nachdem die Luft aus dem Behälter 5 entfernt wurde, wird das Vakuumventil 14 wieder geschlossen. Je nachdem, wie stark das erzeugte Vakuum ist, wird mit diesem Schritt schon eine für den Füllprozess ausreichende Entfernung von Luft aus dem Behälter 5 erreicht. Üblicherweise befindet sich aber immer noch zu viel Restluft im Behälter 5. Dann wird das Gasventil 13 eine bestimmte Zeit lang geöffnet, so dass CO₂ über den Gaskanal 10 in den Innenraum 5.2 des Behälters 5 strömen kann. Das CO₂ entstammt dabei einer CO₂-Flasche, einem CO₂-Reservoir oder einer sonstigen CO₂-Quelle, die an der dem Behälter 5 abgewandten Ende des Gaskanals 10 angeordnet ist. Nun wird das Evakuieren des Behälters 5 wiederholt. Das sich nun im Innenraum 5.2 des Behälters 5 befindliche Gas ist ein Gemisch aus größtenteils CO₂ und in kleinen Mengen Restluft. Sollte diese Menge Restluft immer noch zu groß sein, kann das Einleiten von CO₂ und anschließende Evakuieren so lange wiederholt werden, bis die verbliebene Menge an Restluft klein genug ist.

Alternativ zum Evakuieren des Behälters 5 kann der Innenraum 5.2. des Behälters 5 auch mit CO₂ gespült werden. Hierzu werden das Gasventil 13 und das Vakuumventil 14 gleichzeitig geöffnet, so dass CO₂ in den Behälter 5 einströmt und ein Gemisch aus CO₂ und Luft aus dem Behälter abgesaugt wird. Der Anteil an im Innenraum 5.2 des Behälters 5 verbleibender Restluft wird dabei immer geringer.

Schließlich gibt es eine weitere Alternative, bei der sogar auf den Vakuumkanal 11 und Vakuumventil 14 verzichtet werden kann. Bei dieser Alternative wird dem Füllelement 4 gleich ein mit CO₂ befüllter Behälter 5 übergeben, so dass das Evakuieren und/oder Spülen des Behälters 5 entfallen kann.

Ist der Behälter 5 nunmehr - wie zuvor erläutert - für den Füllprozess vorbereitet, wird über den Gaskanal 10 CO₂ in den Behälter 5 eingebracht, so dass im Behälter 5 ein vorbestimmter Vorspanndruck erzeugt wird. Dieser Vorspanndruck ist dabei so groß, dass die Menge des unter dem Vorspanndruck in den Behälter 5 eingebrachte CO₂ derart bemessen ist, dass diese zum Karbonisieren des flüssigen Füllgutes, mit dem der Behälter 5 anschließend befüllt wird, ausreichend ist. Das flüssige Füllgut kann dabei nicht oder nur teilweise karbonisiert sein, d.h. im teilweise karbonisierten Zustand kann im flüssigen Füllgut bereits gelöstes CO₂ enthalten sein. Die Menge an CO₂, die dem Unterschied zwischen dem schon im flüssigen Füllgut vorhandenen und dem gewünschten CO₂ entspricht, muss sich unter dem Vorspanndruck im Behälter 5 befinden. Ein Vorspanndruck von 1 bar entspricht dabei einer Menge von ungefähr 2 g CO₂ pro Liter. Um beispielsweise ein überhaupt nicht karbonisiertes flüssiges Füllgut auf einen üblichen CO₂-Gehalt von 8 g pro Liter zu karbonisieren, muss ein Vorspanndruck von 4 bar verwendet werden.

Ein hier nicht gezeigter Drucksensor misst den im Innenraum 5.2 bzw. im Bereich der Mündung 5.1 des Behälters 5 herrschenden Druck. In Abhängigkeit von diesem Druck wird das Gasventil 13 gesteuert, so dass der gewünschte Druck im Behälter 5 erreicht wird.

Wenn der gewünschte Vorspanndruck im Behälter 5 erreicht und das Gasventil 13 wieder geschlossen ist, beginnt das Füllen des Behälters 5 mit flüssigem Füllgut. Dazu wird das Füllventil 12 geöffnet, so dass das flüssige Füllgut über den Flüssigkeitskanal 9 in den Behälter 5 strömen kann. An der dem Behälter 5 abgewandten Seite ist der Flüssigkeitskanal 9 dabei beispielsweise mit einem Ringkanal oder mit einem Reservoir verbunden, die das flüssige Füllgut bereitstellen. Um gegen den Vorspanndruck in den Behälter 5 strömen zu können, muss das flüssige Füllgut unter einem Fülldruck aus dem Flüssigkeitskanal 9 austreten, der größer als der Vorspanndruck ist. Vorzugsweise löst sich dabei das im Behälter 5 befindliche CO₂ sofort in dem in den Behälter 5 einströmenden flüssigen Füllgut. Wenn die gewünschte Füllmenge an flüssigem Füllgut im Behälter 5 erreicht wurde, wird das Füllventil 12 wieder geschlossen. Das Erreichen der gewünschten Füllmenge kann dabei beispielsweise über eine vorbestimmte Füllzeit bestimmt sein oder über einen Durchflussmesser oder über eine Füllhöhensonde gemessen werden.

Nach erfolgtem Füllen des Behälters 5 wird im Bereich der Mündung 5.1 des Behälters 5 ein Druck eingestellt, der in etwa gleich dem Sättigungsdruck der im Behälter 5 befindlichen, nun karbonisierten, Flüssigkeit ist. Dazu wird der herrschende Druck mittels des Drucksensors gemessen und über Gaseinleitung durch den Gaskanal 10 oder Gasableitung über den Vakuumkanal 11 der gewünschte Druck eingestellt. Bei diesem Druck erfolgt dann eine vorbestimmte Zeit lang eine Beruhigung der im Behälter 5 befindlichen Flüssigkeit. Nach Ablauf dieser Zeit wird sodann das Vakuumventil 14 geöffnet und der Druck im Bereich der Mündung 5.1 des Behälters 5 auf Atmosphärendruck entlastet. Anschließend wird der Behälter 5 nach unten gezogen, so dass sich die Abdichtung zwischen dem Dichtelement 8 und der Mündung 5.1 des Behälters 5 löst. Der Behälter 5 wird sodann zu einer Verschließvorrichtung transportiert, wo er mit einem Verschlussdeckel verschlossen wird.

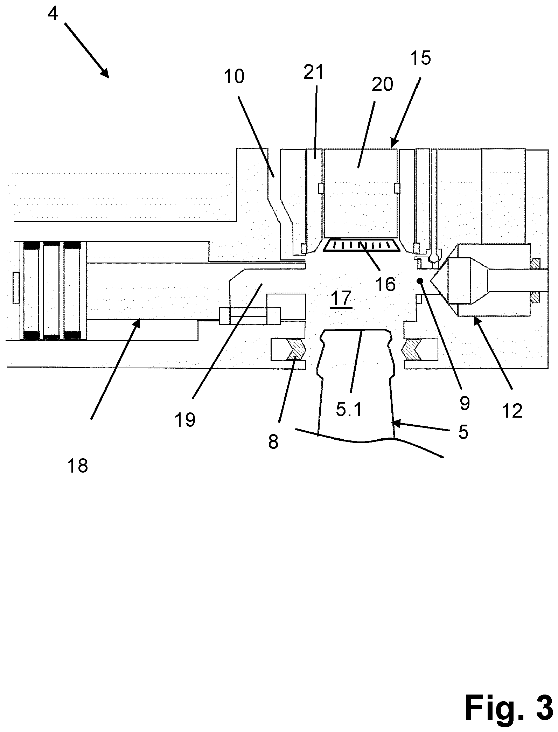

Figur 3 zeigt ein weiteres Ausführungsbeispiel eines erfindungsgemäßen Füllelements 4. Erfindungsgemäß ist zusätzlich noch eine Verschließeinrichtung 15 vorgesehen, die den Behälter 5 mit einem hier als Kronkorken ausgebildeten Verschlussdeckel 16 verschließen kann.

Zum Füllen des Behälters 5 wird dieser zunächst von unten in eine Aussparung des Füllelements 4 eingeführt. Das als Ringdichtung ausgebildete Dichtelement 8 umschließt dann den Behälter 5 von außen, so dass die Aussparung im Füllelement 4 einen Schutzraum 17 bildet, der von der Umgebung isoliert ist. Die Mündung 5.1 des Behälters 5 befindet sich in diesem Schutzraum 17, genauso wie ein Ende des Flüssigkeitskanals 9, ein Ende des Gaskanals 10, ein Ende des hier nicht dargestellten Vakuumkanals und der Verschlussdeckel 16.

Das Evakuieren, Spülen und Vorspannen des Behälters erfolgt wie beim Ausführungsbeispiel in Figur 2 beschrieben. Im vorliegenden Ausführungsbeispiel ist das Ende des Flüssigkeitskanals 9 seitlich im Schutzraum 17 angeordnet. Damit das flüssige Füllgut direkt vom Flüssigkeitskanal 9 in den Behälter 5 gelangen kann, wird mit einem an der dem Ende des Flüssigkeitskanal 9 gegenüberliegenden Seite des Schutzraums 17 angeordnetem Schieber 18 ein abgewinkelter Verbindungskanal 19 derart in den Schutzraum 17 eingeschoben, dass ein Ende des Verbindungskanals 19 mit dem Ende des Flüssigkeitskanals 9 abschließt und das andere Ende des Verbindungskanals 19 direkt über der Mündung 5.1 des Behälters 5 zu liegen kommt. Somit ist ein sicheres Einfüllen des flüssigen Füllguts in den Behälter 5 gewährleistet.

Nach dem Einfüllen des flüssigen Füllguts in den Behälter 5 wird der Schieber 18 mit dem Verbindungskanal 19 zurückgefahren und - falls nötig - der Druck im Schutzraum 17 auf einen Druck oberhalb des Sättigungsdrucks der im Behälter 5 befindlichen Flüssigkeit eingestellt.

Sodann wird der Behälter 5 bei dem im Schutzraum 17 herrschenden Druck verschlossen. Eine Wartezeit zur Beruhigung der im Behälter 5 befindlichen Flüssigkeit ist dabei nicht notwendig, was dieses Verfahren den Füllprozess besonders schnell macht. Der zuvor in den Schutzraum 17 eingebrachte Verschlussdeckel 16 wird dabei oberhalb der Mündung 5.1 des Behälters 5 gehalten. Mittels eines Gegenhalters 20 wird der Verschlussdeckel 16 auf die Mündung 5.1. des Behälters 5 gedrückt. Ein Ziehring 21, der konzentrisch um den Gegenhalter 20 herum angeordnet ist, zieht sodann die Seiten des Kronkorkens 16 über die Mündung 5.1 des Behälters 5 und verschließt damit den Behälter 5.

Schließlich wird das Dichtelement 8 vom Behälter 5 entfernt, der Behälter 5 nach unten aus dem Schutzraum 17 gezogen und zur weiteren Behandlung weitertransportiert.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

So wurde die vorliegende Erfindung vorstehend im Wesentlichen mittels solcher Beschreibungen und/oder Beispiele beschrieben, die Bezug auf CO₂ und eine entsprechende Karbonisierung nahmen. Die Verwendung von N₂ und eine entsprechende Nitrogenisierung wurden nur anhand von wenigen Beispielen dargestellt. Dieses erfolgte aber nicht im Sinne einer Beschränkung der erfindungsgemäßen Verwendung von N₂, sondern lediglich zur Verbesserung der Lesbarkeit der vorliegenden Beschreibung. Folglich sind die Stoffe CO2 und N2 ebenso wie die Begriffe Karbonisierung und Nitrogenisierung im Rahmen der vorliegenden Anmeldung, da wo technisch möglich und sinnvoll, synonym zu verwenden.

### Bezugszeichenliste

- 1: Füllmaschine
- 2: Transportelement
- 3: Füllposition
- 4: Füllelement
- 5: Behälter
- 5.1: Mündung des Behälters
- 5.2: Innenraum des Behälters
- 6: Einlaufstern
- 7: Auslaufstern
- 8: Dichtelement
- 9: Flüssigkeitskanal
- 10: Gaskanal
- 11: Vakuumkanal
- 12: Füllventil
- 13: Gasventil
- 14: Vakuumventil
- 15: Verschließeinrichtung
- 16: Verschlussdeckel
- 17: Schutzraum
- 18: Schieber
- 19: Verbindungskanal
- 20: Gegenhalter
- 21: Ziehring

- A: Achse
- T: Transportrichtung

## Patentansprüche

1. Füllmaschine zum Füllen von Behältern (5) mit einem flüssigen Füllgut, wobei die Füllmaschine (1) eine Vielzahl von Füllpositionen (3) aufweist, wobei jede Füllposition (3) ein Füllelement (4) aufweist, und wobei jedes Füllelement (4) ein Dichtelement (8) zum Abdichten einer Mündung (5.1) des Behälters (5), einen durch ein Füllventil (12) verschließbaren Flüssigkeitskanal (9) und einen durch ein Gasventil (13) verschließbaren Gaskanal (10) umfasst, wobei der Flüssigkeitskanal (9) bei geöffnetem Füllventil (12) in Fluidverbindung mit dem Innenraum (5.2) des Behälters (5) und der Gaskanal (10) bei geöffnetem Gasventil (13) in Fluidverbindung mit dem Innenraum (5.2) des Behälters (5) stehen, wobei die Füllmaschine (1) dazu ausgebildet ist, über den Gaskanal (10) CO₂ oder N₂ in den Behälter (5) vor dem Füllen mit flüssigen Füllgut einzubringen und im Behälter (5) einen Vorspanndruck zu erzeugen, wobei das unter Vorspanndruck im Behälter (5) befindliche CO₂ die zur Karbonisierung oder das unter Vorspanndruck im Behälter (5) befindliche N₂ zur Nitrogenisierung des flüssigen Füllguts erforderliche Menge aufweist, und anschließend über den Flüssigkeitskanal (9) das flüssige Füllgut unter einem den Vorspanndruck überschreitenden Fülldruck in den Behälter (5) einzubringen, **dadurch gekennzeichnet, dass** das Füllelement (4) einen Drucksensor aufweist, der dazu ausgebildet ist, den Druck im Innenraum (5.2) des Behälters (5) und/oder im Bereich der Mündung (5.1) des Behälters (5) zu messen und dass das Dichtelement (8) an einen Schutzraum (17) angrenzt und jede Füllposition (3) eine Verschließeinrichtung (15) aufweist, wobei die Verschließeinrichtung (15) dazu ausgebildet ist, die Mündung (5.1) des Behälters (5) im Schutzraum (17) mit einem Verschlussdeckel (16) zu verschließen.

2. Füllmaschine nach Anspruch 1, **dadurch gekennzeichnet, dass** das flüssige Füllgut vor dem Karbonisieren im Behälter (5) nicht oder nur teilweise karbonisiert oder mit N₂ angereichert ist.

3. Füllmaschine nach Anspruch 1 oder 2, **dadurch gekennzeichnet, dass** der Vorspanndruck zwischen 0,1 bar und 6 bar, vorzugsweise zwischen 2 bar und 5 bar, beträgt.

4. Füllmaschine nach einem der vorhergehenden Ansprüche, **dadurch gekennzeichnet, dass** jedes Füllelement (4) einen durch ein Vakuumventil (14) verschließbaren Vakuumkanal (11) umfasst, wobei der Vakuumkanal (11) bei geöffnetem Vakuumventil (14) in Fluidverbindung mit dem Innenraum (5.2) des Behälters (5) steht, und die Füllmaschine (1) dazu ausgebildet ist, über den Vakuumkanal (11) im Innenraum (5.2) des Behälters (5) einen Unterdruck zu erzeugen und/oder den Druck im Bereich der Mündung (5.1) des Behälters (5) zu verringern.

5. Füllmaschine nach einem der vorhergehenden Ansprüche, **dadurch gekennzeichnet, dass** die Füllpositionen (3) an einem umlaufenden Transportelement (2) angeordnet sind.

6. Verfahren zum Füllen von Behältern (5) mit einem flüssigen Füllgut mittels einer Füllmaschine (1) nach einem der Ansprüche 1 bis 5, wobei die Füllmaschine (1) eine Vielzahl von Füllpositionen (3) aufweist und jede Füllposition (3) ein Füllelement (4) aufweist, wobei eine Mündung (5.1) des Behälters (5) mit einem Dichtelement (8) des Füllelements (4) abgedichtet wird und ein einen Flüssigkeitskanal (9) verschließendes Füllventil (12) geöffnet wird, so dass das flüssige Füllgut über den Flüssigkeitskanal (9) unter einem Fülldruck in den Behälter (5) eingebracht wird, wobei nach dem Abdichten der Mündung (5.1) des Behälters (5) und vor dem Einbringen des flüssigen Füllguts ein einen Gaskanal (10) verschließendes Gasventil (13) geöffnet wird, so dass CO₂ in den Behälter (5) eingebracht wird und dadurch im Behälter (5) ein Vorspanndruck erzeugt wird, wobei das unter Vorspanndruck im Behälter (5) befindliche CO₂ die zur Karbonisierung des flüssigen Füllguts erforderliche Menge aufweist, und dass das flüssige Füllgut über den Flüssigkeitskanal (9) mit einem den Vorspanndruck übersteigenden Fülldruck in den Behälter (5) eingebracht wird, **dadurch gekennzeichnet, dass** der im Innenraum (5.2) des Behälters (5) und/oder im Bereich der Mündung (5.1) des Behälters (5) herrschende Druck mittels eines Drucksensors gemessen wird und dass ein Verschlussdeckel (16) in einem Schutzraum (17), an den das Dichtelement (8) angrenzt, aufgenommen wird, nach dem Einbringen des flüssigen Füllguts vorzugsweise ein Druck im Bereich der Mündung (5.1) des Behälters (5) eingestellt wird, der über dem Sättigungsdruck des CO₂ der im Behälter (5) befindlichen Flüssigkeit liegt, sodann die Mündung (5.1) des Behälters (5) mit dem Verschlussdeckel (16) verschlossen wird und anschließend die Mündung (5.1) des Behälters (5) vom Dichtelement (8) gelöst wird.

7. Verfahren nach Anspruch 6, **dadurch gekennzeichnet, dass** beim Einbringen des flüssigen Füllguts in den Behälter (5) das im Behälter (5) befindliche CO₂ sofort im flüssigen Füllgut gelöst und dadurch das flüssige Füllgut zumindest teilweise karbonisiert wird.

8. Verfahren nach Anspruch 6 oder 7, **dadurch gekennzeichnet, dass** vor dem Einbringen des CO₂ unter Vorspanndruck in den Behälter (5) der Behälter (5) zumindest einmal über einen Vakuumkanal (11) evakuiert und/oder mit CO₂ gespült wird.

9. Verfahren nach einem der Ansprüche 6 bis 8, **dadurch gekennzeichnet, dass** nach dem Einbringen des flüssigen Füllguts vorzugsweise ein Druck im Bereich der Mündung (5.1) des Behälters (5) eingestellt wird, der in etwa gleich dem Sättigungsdruck des CO₂ der im Behälter (5) befindlichen Flüssigkeit ist, eine vorbestimmte Zeit lang eine Beruhigung der im Behälter (5) befindlichen Flüssigkeit durchgeführt wird, anschließend der Druck im Bereich der Mündung (5.1) des Behälters (5) auf Atmosphärendruck entlastet wird und der Behälter (5) zu einer Verschließvorrichtung transportiert wird.

## Claims

1. Filling machine for filling containers (5) with liquid contents, wherein the filling machine (1) has a plurality of filling positions (3), wherein each filling position (3) has a filling element (4), and wherein each filling element (4) comprises a sealing element (8) for sealing an opening (5.1) of the container (5), a liquid channel (9) which can be controlled by a filling valve (12), and a gas channel (10) which can be closed by a gas valve (13), wherein the liquid channel (9) is fluidically connected to the interior (5.2) of the container (5) when the filling valve (12) is open, and the gas channel (10) is fluidically connected to the interior (5.2) of the container (5) when the gas valve (13) is open, wherein the filling machine (1) is designed to introduce CO₂ or N₂ into the container (5) via the gas channel (10) before it is filled with liquid contents, and to produce a preload pressure in the container (5), wherein the CO₂ which is present under preload pressure in the container (5) for carbonating or the N₂ present in the container (5) for nitrogenating the liquid contents are of the required quantity, and then to introduce the liquid contents into the container (5) via the liquid channel (9) under a filling pressure which exceeds the preload pressure, **characterised in that** the filling element (4) has a pressure sensor, which is configured such as to measure the pressure in the interior (5.2) of the container (5) and/or in the region of the opening (5.1) of the container (5), and that the sealing element (8) is adjacent to a protection space (17), and each filling position (3) has a closing device (15), wherein the closing device (15) is configured such as to close the opening (5.1) of the container (5) in the protection space (17) with a closing cover (16).

2. Filling machine according to claim 1, **characterised in that**, before the carbonating in the container (5), the liquid contents are not or only partially carbonated or enriched with N₂.

3. Filling machine according to claim 1 or 2, **characterised in that** the preloading pressure amounts to between 0.1 bar and 6 bar, and preferentially to between 2 bar and 5 bar.

4. Filling machine according to any one of the preceding claims, **characterised in that** each filling element (4) comprises a vacuum channel (11) which can be closed by a vacuum valve (14), wherein, with the vacuum valve (14) open, the vacuum channel (11) is fluidically connected to the interior (5.2) of the container (5), and the filling machine (1) is designed to produce a negative pressure in the interior (5.2) of the container (5) by means of the vacuum channel (11), and/or to reduce the pressure in the region of the opening (5.1) of the container (5).

5. Filling machine according to any one of the preceding claims, **characterised in that** the filling position (3) is arranged on a circulating transport element (2),

6. Method for filling containers (5) with liquid contents by means of a filling machine (1) according to any one of claims 1 to 5, wherein the filling machine (1) has a plurality of filling positions (3), and each filling position (3) has a filling element (4), wherein an opening (5.1) of the container (5) is sealed with a sealing element (8) of the filling element (4), and a filling valve (12) which closes the liquid channel (9) is opened, such that the liquid contents are introduced via the liquid channel (9) under a filling pressure into the container (5), wherein, after the sealing of the opening (5.1) of the container (5), and, before the liquid contents are introduced, a gas valve (13) which closes a gas channel (10) is opened, such that CO₂ is introduced into the container (5), and, as a result, a preload pressure is produced in the container (5), wherein the CO₂ present under preload pressure in the container (5) is of the quantity required for the carbonating of the liquid contents, and that the liquid contents (9) are introduced into the container (5) under a filling pressure which exceeds the preload pressure, **characterised in that** the pressure prevailing in the interior (5.2) of the container (5) and/or in the region of the opening (5.1) of the container (5) is measured by means of a pressure sensor, and that a closure cover (16) is accommodated in a protection space (17), adjacent to the sealing element (8), after the introduction of the liquid contents a pressure is preferably established in the region of the opening (5.1) of the container (5) which is above the saturation pressure of the CO₂ of the liquid present in the container (5), such that the opening (5.1) of the container (5) is closed by the closure lid (16), and then the opening (5.1) of the container (5) is released by the sealing element (8).

7. Method according to claim 6, **characterised in that**, at the introduction of the liquid contents into the container (5), the CO₂ present in the container (5) is immediately dissolved in the liquid contents and, as a result, the liquid contents are at least partially carbonated.

8. Method according to claim 6 or 7, **characterised in that**, before the introduction of the CO₂ under preload pressure into the container (5), the container (5) is evacuated at least once via a vacuum channel (11) and/or flushed with CO₂.

9. Method according to any one of claims 6 to 8, **characterised in that**, after the introduction of the liquid contents, a pressure is preferably established in the region of the opening (5.1) of the container (5) which is approximately equal to the saturation pressure of the CO₂ of the liquid contents present in the container (5), for a predetermined period of time the liquid present in the container (5) is stirred, and then the pressure in the region of the opening (5.1) of the container (5) is relaxed to atmospheric pressure, and the container (5) is transported to a closing device.

## Revendications

1. Machine de remplissage pour le remplissage de récipients (5) avec un produit de remplissage liquide, dans laquelle la machine de remplissage (1) présente une pluralité de positions de remplissage (3), dans laquelle chaque position de remplissage (3) présente un élément de remplissage (4), et dans laquelle chaque élément de remplissage (4) comprend un élément étanche (8) pour rendre étanche une embouchure (5.1) du récipient (5), un canal de liquide (9) refermable par une vanne de remplissage (12) et un canal de gaz (10) refermable par une vanne de gaz (13), dans laquelle en cas de vanne de remplissage (12) ouverte, le canal de liquide (9) est en liaison fluidique avec l'espace intérieur (5.2) du récipient (5) et en cas de vanne de gaz (13) ouverte, le canal de gaz (10) est en liaison fluidique avec l'espace intérieur (5.2) du récipient (5), dans laquelle la machine de remplissage (1) est réalisée afin d'introduire par le biais du canal de gaz (10) du CO₂ ou N₂ dans le récipient (5) avant le remplissage avec du produit de remplissage liquide et de générer dans le récipient (5) une pression de précontrainte, dans laquelle le CO₂ se trouvant sous pression de précontrainte dans le récipient (5) présente la quantité nécessaire à la carbonisation ou le N₂ se trouvant sous pression de précontrainte dans le récipient (5) présente la quantité nécessaire à l'azotation du produit de remplissage liquide, et ensuite d'introduire par le biais du canal de liquide (9) le produit de remplissage liquide sous une pression de remplissage dépassant la pression de précontrainte dans le récipient (5), **caractérisée en ce que** l'élément de remplissage (4) présente un capteur de pression qui est réalisé afin de mesurer la pression dans l'espace intérieur (5.2) du récipient (5) et/ou dans la zone de l'embouchure (5.1) du récipient (5) et **en ce que** l'élément étanche (8) est contigu à un espace de protection (17) et chaque position de remplissage (3) présente un dispositif de fermeture (15), dans laquelle le dispositif de fermeture (15) est réalisé afin de refermer l'embouchure (5.1) du récipient (5) dans l'espace de protection (17) avec un couvercle de fermeture (16).

2. Machine de remplissage selon la revendication 1, **caractérisée en ce que** le produit de remplissage liquide n'est pas carbonisé ou seulement partiellement avant la carbonisation dans le récipient (5) ou est enrichi en N₂.

3. Machine de remplissage selon la revendication 1 ou 2, **caractérisée en ce que** la pression de précontrainte est comprise entre 0,1 bar et 6 bars, de préférence entre 2 bars et 5 bars.

4. Machine de remplissage selon l'une quelconque des revendications précédentes, **caractérisée en ce que** chaque élément de remplissage (4) comprend un canal de vide (11) refermable par une vanne de vide (14), dans laquelle en cas de vanne de vide (14) ouverte, le canal de vide (11) est en liaison fluidique avec l'espace intérieur (5.2) du récipient (5), et la machine de remplissage (1) est réalisée afin de générer une dépression par le biais du canal de vide (11) dans l'espace intérieur (5.2) du récipient (5) et/ou de diminuer la pression dans la zone de l'embouchure (5.1) du récipient (5).

5. Machine de remplissage selon l'une quelconque des revendications précédentes, **caractérisée en ce que** les positions de remplissage (3) sont agencées au niveau d'un élément de transport (2) tournant.

6. Procédé de remplissage de récipients (5) avec un produit de remplissage liquide au moyen d'une machine de remplissage (1) selon l'une quelconque des revendications 1 à 5, dans lequel la machine de remplissage (1) présente une pluralité de positions de remplissage (3) et chaque position de remplissage (3) présente un élément de remplissage (4), dans lequel une embouchure (5.1) du récipient (5) est rendue étanche avec un élément étanche (8) de l'élément de remplissage (4) et une vanne de remplissage (12) refermant un canal de liquide (9) est ouverte de sorte que le produit de remplissage liquide soit introduit par le biais du canal de liquide (9) sous une pression de remplissage dans le récipient (5), dans lequel après l'étanchéification de l'embouchure (5.1) du récipient (5) et avant l'introduction du produit de remplissage liquide, une vanne de gaz (13) refermant un canal de gaz (10) est ouverte de sorte que du CO₂ soit introduit dans le récipient (5) et ainsi une pression de précontrainte soit générée dans le récipient (5), dans lequel le CO₂ se trouvant sous pression de précontrainte dans le récipient (5) présente la quantité nécessaire à la carbonisation du produit de remplissage liquide, et en ce que le produit de remplissage liquide est introduit par le biais du canal de liquide (9) avec une pression de remplissage dépassant la pression de précontrainte dans le récipient (5), **caractérisé en ce que** la pression régnant dans l'espace intérieur (5.2) du récipient (5) et/ou dans la zone de l'embouchure (5.1) du récipient (5) est mesurée au moyen d'un capteur de pression et **en ce qu'**un couvercle de fermeture (16) est reçu dans un espace de protection (17), auquel l'élément étanche (8) est contigu, après l'introduction du produit de remplissage liquide une pression est de préférence réglée dans la zone de l'embouchure (5.1) du récipient (5), laquelle se trouve au-dessus de la pression de saturation du CO₂ du liquide se trouvant dans le récipient (5), puis l'embouchure (5.1) du récipient (5) est fermée avec le couvercle de fermeture (16) et ensuite l'embouchure (5.1) du récipient (5) est détachée de l'élément étanche (8).

7. Procédé selon la revendication 6, **caractérisé en ce que** lors de l'introduction du produit de remplissage liquide dans le récipient (5), le CO₂ se trouvant dans le récipient (5) est immédiatement dissous dans le produit de remplissage liquide et ainsi le produit de remplissage liquide est carbonisé au moins partiellement.

8. Procédé selon la revendication 6 ou 7, **caractérisé en ce que** le récipient (5) est évacué au moins une fois par le biais d'un canal de vide (11) et/ou rincé avec du CO₂ avant l'introduction du CO₂ sous pression de précontrainte dans le récipient (5).

9. Procédé selon l'une quelconque des revendications 6 à 8, **caractérisé en ce qu'**après l'introduction du produit de remplissage liquide, une pression est de préférence réglée dans la zone de l'embouchure (5.1) du récipient (5), laquelle est à peu près identique à la pression de saturation du CO₂ du liquide se trouvant dans le récipient (5), une stabilisation du liquide se trouvant dans le récipient (5) est réalisée pendant un temps prédéterminé, la pression dans la zone de l'embouchure (5.1) du récipient (5) est ensuite déchargée à la pression atmosphérique et le récipient (5) est transporté vers un dispositif de fermeture.
